# EUROPÄISCHE PATENTSCHRIFT

(11) **EP 1 225 118 B1**
(45) Veröffentlichungstag und Bekanntmachung des Hinweises auf die Patenterteilung: **07.11.2007**
(21) Anmeldenummer: 01129816.3
(22) Anmeldetag: 14.12.2001
(51) Int. Cl.: B62D 15/02, G01L 5/22

(54) **Sensorvorrichtung zur Ermittlung eines Lenkwinkels und eines Lenkmoments**
Sensor device for determining a steering angle and a steering torque
Dispositif de détection pour déterminer un angle et un couple de braquage

(30) Priorität: 12.01.2001 DE 10101174
(43) Veröffentlichungstag der Anmeldung: 24.07.2002
(73) Patentinhaber: AUDI AG, 85045 Ingolstadt (DE)
(72) Erfinder: Schmid, Stefan, 85092 Kösching (DE); Grosshauser, Frank, 86529 Schrobenhausen (DE)
(74) Vertreter: Thielmann, Frank

(56) Entgegenhaltungen:
- DE-A- 19 745 823
- DE-A- 19 908 522
- FR-A- 2 626 369
- PATENT ABSTRACTS OF JAPAN vol. 009, no. 137 (P-363), 12. Juni 1985 (1985-06-12) & JP 60 018707 A (JIDOSHA KIKI KK), 30. Januar 1985 (1985-01-30)

## Beschreibung

Die Erfindung betrifft eine Sensorvorrichtung zur Ermittlung eines Lenkwinkels und eines Lenkmoments bei einer Lenkradbewegung in einem Fahrzeug. Die Erfindung betrifft auch ein entsprechendes Verfahren.

Die Ermittlung eines Lenkwinkels ist wesentlich für die Erkennung des Fahrerrichtungswunsches, der als zentrale Größe in zahlreiche Systeme der Fahrzeugtechnik, wie z.B. in das "elektronische Stabilitätsprogramm (ESP)" oder auch in das "Electronic Power Steering (EPS)", Eingang findet. Ein Sensor zur Bestimmung eines Lenkwinkels und damit auch des Fahrerrichtungswunsches wird in der Regel als Einzelsteuergerät konzipiert und befindet sich an einer Lenksäule eines Fahrzeugs im Bereich der Lenkstockschalter.

Je nach System kann unter dem Lenkwinkel der Winkel zu verstehen sein, der proportional zu dem Winkel ist, um den die Räder des Fahrzeugs auf die Lenkradbewegung hin durch das Lenkgetriebe eingeschlagen werden. Alternativ kann es sich um den Winkel handeln, um den ein Fahrer das Lenkrad dreht. Wie die beiden sich voneinander unterscheiden können, wird im nachfolgenden näher ausgeführt.

Zur Bestimmung des Lenkmoments wird im Stand der Technik, insbesondere in Verbindung mit elektrischen Lenkungssystemen, ein Lenkmomentsensor eingesetzt. Dabei ist unter dem Lenkmoment dasjenige Moment zu verstehen, welches am Lenkrad vom Fahrer aufgebracht wird, um eine Lenkwinkeländerung zu erreichen. Der Lenkmomentsensor ist im Normalfall als eigenständiges Steuergerät ausgeführt und befindet sich am Lenkgetriebe.

Ein Lenkmomentsensor ist beispielsweise aus der US 5,369,583 bekannt. Der in dieser Druckschrift beschriebene Sensor weist eine erste und eine zweite bewegliche Lochscheibe auf, wobei die relative Winkelbewegung der ersten Lochscheibe gegenüber der zweiten Lochscheibe detektierbar ist. Während die erste Lochscheibe direkt mit der Lenkradbewegung beaufschlagt ist, ist die zweite Lochscheibe über eine Feder oder einen Drehstab mit der Lenkradbewegung beaufschlagt. Durch den in dieser Druckschrift beschriebenen Lenkmomentsensor kann Licht, das durch die beiden Lochscheiben hindurchtritt, erfaßt werden. Das durch die beiden Lochblenden hindurchtretende Licht stellt ein Maß für das Lenkmoment dar, so daß dieses mit Hilfe des Lenkmomentsensors direkt ermittelt werden kann. Für die Ermittlung des Lenkwinkels ist ein separater Lenkwinkelsensor erforderlich.

Der Einsatz zweier eigenständiger Sensoren für den Lenkwinkel und das Lenkmoment erhöht den Bauraumbedarf und ist kostenintensiv, da die Montage entsprechend aufwendig ist. Außerdem ergibt sich bei dem Einsatz zweier getrennter Sensoren, von denen einer in der Regel am Lenkgetriebe angeordnet ist, ein erhöhter Zeit- und Kostenaufwand bei der Wartung.

Sowohl die DE 197 45 823 A1, als auch die DE 199 08 522 A1 beschreiben eine Vorrichtung zum gleichzeitigen Messen von Drehmoment und Drehwinkel einer drehbaren Welle, welche Vorrichtung die im Oberbegriff des Anspruchs 1 definierten Merkmale aufweist. Die Vorrichtung enthält zwei an axial voneinander entfernten Stellen der Welle drehfestbefestigte Bauteile, deren relative Winkellage sich bei einer Drehmomentbeaufschlagung der Welle ändert und eine Drehmomentmesseinrichtung, die ein im Wesentlichen nur von der Winkellage der beiden Bauteile abhängiges Drehmomentmesssignal erzeugt. Die Bauteile sind über einen Torsionsstab miteinander verbunden. Eines der Bauteile ist sowohl zur Drehmomentsmessung als auch zur Drehstellungsmessung ausgebildet, wobei die Drehmomentmesseinrichtung bei der axial hintereinander angeordneten Messkörper erfasst und die Drehstellungsmesseinrichtung nur den einen der Messkörper erfasst.

Durch die Verwendung eines Torsionsstabes wird durch die Vorrichtung gemäß der DE 197 45 823 A1 und die DE 199 08 522 A1 relativ viel Platz verbraucht.

Eine platzsparende Anordnung eines Steuerwinkelsensors im Bereich der oberen Längssäule ist aus der JB 60-0018707 A bekannt. Wegen des Erfordernisses des Vorhandenseins eines Torsionsstabs kann kein Zusammenhang dieser Lösung zur Messung des Steuerwinkels mit der Messung des Drehmoments hergestellt werden.

Demgemäß ist es Aufgabe der Erfindung, für die Ermittlung des Lenkwinkels und des Lenkmoments eine Sensorvorrichtung bereitzustellen, die einen geringen Bauraumbedarf besitzt und eine kostengünstige und wenig zweitaufwendige Montage und Wartung ermöglicht. Außerdem liegt der Erfindung die Aufgabe zugrunde, ein entsprechendes Verfahren bereitzustellen.

Diese Aufgabe wird erfindungsgemäß durch eine Sensorvorrichtung zur Ermittlung eines Lenkwinkels und eines Lenkmoments bei einer Lenkradbewegung in einem Fahrzeug gelöst mit einer ersten Erfassungseinheit, mit der eine erste Größe ermittelbar ist, die mit einer relativen Ortsänderung eines ersten mit der Lenkradbewegung beaufschlagten Detektionselementes gegenüber einem ersten unbeweglichen Fahrzeugelement korreliert ist. Die erfindungsgemäße Sensorvorrichtung weist außerdem eine zweite Erfassungseinheit auf, mit der eine zweite Größe ermittelbar ist, die mit einer relativen Ortsänderung eines zweiten Detektionselementes gegenüber einem zweiten unbeweglichen Fahrzeugelement korreliert ist, wobei das zweite Detektionselement mit der Lenkradbewegung über ein elastisches Verbindungsglied beaufschlagt ist. Durch eine Auswerteeinheit ist aus der ersten oder aus der zweiten Größe ein Lenkwinkel und aus der ersten und der zweiten Größe das Lenkmoment des Lenkrads ermittelbar. Ob die erste oder die zweite Größe in die Ermittlung des Lenkwinkels eingeht, hängt davon ab, ob die erste oder zweite Alternative nach der oben getroffenen Definition des Lenkwinkels von Interesse ist. Hinzuweisen ist dabei darauf, dass bei mechanischen oder elektronischen Lenkungssystemen unterschiedlich vorgegangen werden kann, d.h. dass die Ortsänderung des ersten Detektionselementes oder die Ortsänderung des zweiten Detektionselementes das Maß für den Winkel bilden kann, um den die Räder des Fahrzeugs auf die Lenkradbewegung hin eingeschlagen werden.

Zur Lösung der Aufgabe ist schließlich vorgesehen, dass das elastische Verbindungsglied außerhalb der Längsachse der Lenksäule angeordnet ist.

Der Erfindung liegt die Erkenntnis zugrund, dass eine Größe, aus der der Lenkwinkel ermittelbar ist, in der Ermittlung des Lenkmoments eingehen kann, wenn zusätzlich eine geeignete weitere Größe erfassbar ist.

Da durch die erfindungsgemäße Sensorvorrichtung sowohl der Lenkwinkel als auch das Lenkmoment bestimmt werden können, wird Bauraum innerhalb des Fahrzeugs gespart. Die erfindungsgemäße Sensorvorrichtung stellt außerdem ein äußerst einfaches und wenig störungsanfälliges System dar, das sehr leicht montiert werden kann und aufgrund seiner kompakten Struktur einfach zu warten ist. Durch die Integration in einem einzigen Steuergerät kann außerdem eine interne Überprüfung der beiden Größen Lenkwinkel und Lenkmoment durchgeführt werden. Da durch diese interne Überprüfung bei der Ermittlung von Lenkwinkel und Lenkmoment auftretende Fehler aufgedeckt werden können, sind die Lenkwinkel- und Lenkmomentwerte im Vergleich zu den durch Einzelsensoren ermittelten Lenkwinkel- und Lenkmomentwerten als äußerst robust zu bezeichnen.

In einer ersten besonders vorteilhaften Weiterbildung der Erfindung ist mit der Auswerteeinheit eine dritte Größe durch Differenzbildung der ersten und der zweiten Größe ermittelbar ist, wobei die dritte Größe proportional zu dem Lenkmoment ist. Bei dieser Weiterbildung sind die erste Größe und die zweite Größe folglich miteinander vergleichbare Größen.

Vorteilhafterweise kann die relative Ortsänderung des ersten mit der Lenkradbewegung beaufschlagten Detektionselementes gegenüber dem ersten unbeweglichen Fahrzeugelement eine Winkeländerung, insbesondere der Lenkwinkel nach der zweiten oben genannten Alternative, sein. Bei entsprechender mechanischer oder elektronischer Kopplung des ersten Detektionselementes mit dem Lenkgetriebe kann die erste Größe der Lenkwinkel gemäß der ersten oben erwähnten Alternative sein. Auch dieser Lenkwinkel ergibt sich dann direkt aus der ermittelten Größe und muß nicht erst durch zusätzliche Auswerteschritte berechnet werden.

Auch die relative Ortsänderung des zweiten Detektionselementes gegenüber dem zweiten unbeweglichen Fahrzeugelement kann eine Winkeländerung, insbesondere der Lenkwinkel nach der ersten Alternative, darstellen. Ist nämlich nicht das erste Detektionselement sondern das zweite Detektionselement mit dem Lenkgetriebe mechanisch oder elektronisch gekoppelt, kann es sich bei der zweiten Größe um den Lenkwinkel gemäß der ersten oben genannten Alternative handeln, obgleich hier neben der vom Fahrer verursachten Lenkradbewegung die Verformung des elastischen Verbindungsgliedes eingeht.

Durch Subtraktion der zweiten Größe von der ersten Größe kann eine dritte Größe ermittelbar sein, die proportional zum Lenkmoment ist.

In einer weiteren besonders vorteilhaften Weiterbildung der Erfindung weist die erste Erfassungseinheit einen Lenksignalgeber und ein Lenksensorelement auf, wobei der Lenksignalgeber und das Lenksensorelement derartig ausgebildet und an dem ersten Detektionselement und dem ersten unbeweglichen Fahrzeugelement angeordnet sind, daß die relative Bewegung des ersten Detektionselementes gegenüber dem ersten unbeweglichen Fahrzeugelement insbesondere induktiv und/oder magnetoresistiv und/oder optisch, durch das Lenksensorelement detektierbar ist. Der Lenksignalgeber kann dabei beispielsweise als Codescheibe ausgebildet sein, insbesondere in Form eines Magnetringes.

Die zweite Erfassungseinheit kann einen Signalgeber und ein Sensorelement aufweisen, wobei der Signalgeber und das Sensorelement derart ausgebildet und an dem zweiten Detektionselement und an dem zweiten unbeweglichen Fahrzeugelement angeordnet sind, daß die relative Bewegung des zweiten Detektionselementes gegenüber dem zweiten unbeweglichen Fahrzeugelement insbesondere induktiv und/oder magnetisch resistiv und/oder optisch, durch das Sensorelement detektierbar ist. Auch in diesem Fall kann der Signalgeber als Codescheibe ausgebildet sein, insbesondere in Form eines Magnetringes.

Das elastische Verbindungsglied kann ein Federelement und/oder ein Elastomer umfassen. Die Wahl des elastischen Verbindungsgliedes richtet sich insbesondere danach, wo genau dieses innerhalb des Lenksystems angebracht werden soll.

Das erste unbewegliche Fahrzeugelement kann dem zweiten unbeweglichen Fahrzeugelement entsprechen, um die erfindungsgemäße Sensorvorrichtung durch die Verwendung einer geringen Bauteilanzahl noch einfacher und kostengünstiger zu gestalten.

Eine weitere vorteilhafte Ausgestaltung der Erfindung sieht vor, daß das erste Detektionselement das Lenkrad ist, so daß die zu ermittelnde erste Größe direkt am Lenkrad erfaßbar ist. Als erstes Detektionselement kann auf diese Weise ein Element genutzt werden, das bereits vorhanden ist.

Weiterhin kann das zweite Detektionselement über das Verbindungsglied mit dem Lenkrad verbunden sein.

In einer weiteren Ausgestaltung der Erfindung ist das erste und/oder das zweite unbewegliche Fahrzeugelement eine Verkleidung der Lenksäule. Auch in diesem Fall kann ein bereits vorhandenes Element für die erfindungsgemäße Sensorvorrichtung genutzt werden, so daß nur sehr wenige Zusatzelemente zur Realisierung der erfindungsgemäßen Sensorvorrichtung erforderlich sind.

Die obige Aufgabe wird auch durch ein Verfahren zur Ermittlung eines Lenkwinkels und eines Lenkmoments bei einer Lenkradbewegung in einem Fahrzeug gelöst, bei dem in einem ersten Schritt eine erste Größe ermittelt wird, die mit einer relativen Ortsänderung eines ersten mit der Lenkradbewegung beaufschlagten Detektionselements gegenüber einem ersten unbeweglichen Fahrzeugelement korreliert ist. Außerdem wird eine zweite Größe ermittelt, die mit einer relativen Ortsänderung eines zweiten Dektetkonselements gegenüber einem zweiten unbeweglichen Fahrzeugelement kontrolliert ist, wobei das zweite Detektionselement mit der ersten Lenkradbewegung über ein elastisches Verbindungsglied beaufschlagt ist, das außerhalb der Längsachse der Lenksäule (18) angeordnet ist. Aus der ersten Größe oder aus der zweiten Größe wird ein Lenkwinkel ermittelt, während aus der ersten und der zweiten Größe das Lenkmoment ermittelt wird.

Neben der Realisierung der bereits oben im Zusammenhang mit der erfindungsgemäßen Vorrichtung erwähnten Funktionen, kann bei dem erfindungsgemäßen Verfahren vorgesehen sein, dass in einem weiteren Schritt aus der ersten Größe und aus der zweiten Größe eine Vergleichsgröße ermittelt wird, die mit einem Grenzwert verglichen wird, wobei bei Überschreiten oder bei Unterschreiten des Grenzwertes eine Fehlermeldung erzeugt wird. Es wird also eine Plausibilisierung durchgeführt, in der festgestellt wird, ob die beiden ermittelten Größen in erwarteter Art und Weise miteinander korrelieren.

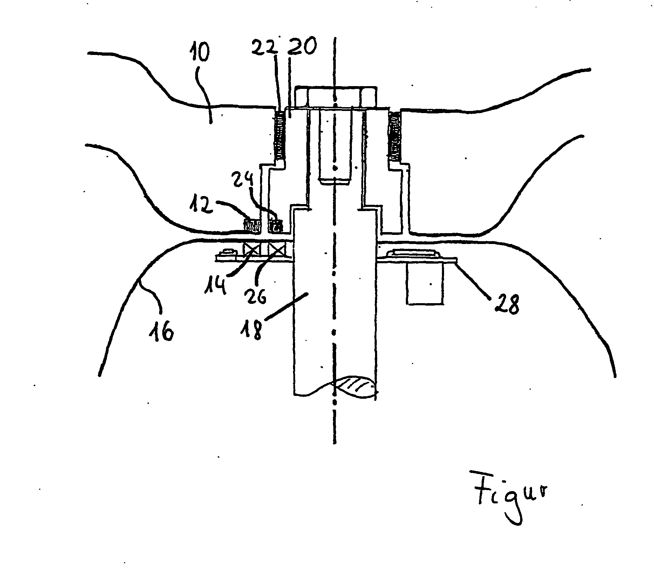

Weitere Vorteile gehen aus den im Folgenden unter Hinweis auf die beigefügte Zeichnung beschriebenen Ausführungsbeispielen hervor.
- Die Figur: zeigt eine geschnitten dargestellte Ansicht einer ersten Ausführungsform einer erfindungsgemäßen Sensorvorrichtung, die in ein Lenksystem eines Fahrzeugs integriert ist.

In der Figur ist eine erste Ausführungsform der erfindungsgemäßen Sensorvorrichtung dargestellt, bei der als erstes Detektionselement 10 ein Lenkrad eines Fahrzeugs eingesetzt wird, an dem ein Lenksignalgeber 12 angeordnet ist. Dieser Lenksignalgeber 12 wirkt mit einem Lenksensorelement 14 zusammen, das an einem unbeweglichen Fahrzeugelement 16, nämlich einer Verkleidung einer Lenksäule 18 angebracht ist. Der Lenksignalgeber 12 besteht vorzugsweise aus einer Codescheibe, durch die induktiv oder optisch oder magnetoresistiv Signale gegeben werden, die durch das Lenksensorelement 14 erfaßbar sind. Die relative Ortsänderung des Lenksignalgebers 12 gegenüber dem Lenksensorelement 14 wird in der Regel durch die Änderung der Signale der Codescheibe erfaßt.

Ein zweites Detektionselement 20 ist mit dem ersten Detektionselement 10 bzw. dem Lenkrad über ein Verbindungsglied 22 verbunden, wobei das Verbindungsglied 22 insbesondere ein oder mehrere Federelemente umfassen kann. Auch an diesem zweiten Detektionselement 20 ist ein Signalgeber 24 angeordnet, der mit einem Sensorelement 26 wechselwirkt, das an einem unbeweglichen Fahrzeugelement 16, hier an der Verkleidung der Lenksäule 18, angebracht ist. Die Wechselwirkung zwischen dem Signalgeber 24 und dem Sensorelement 26 erfolgt optisch, magnetoresistiv oder induktiv. Der Signalgeber 24 ist zu diesem Zweck vorzugsweise als Codescheibe ausgebildet.

Wird nun das erste Detektionselement 10, also das Lenkrad, durch den Fahrer bewegt, wird das Verbindungsglied 22 proportional zu dem Drehmoment, das der Fahrer aufbringt, verformt. Die relative Ortsänderung des zweiten Detektionselementes 20 gegenüber der Lenksäulenverkleidung 16 kann durch das Sensorelement 26 als Lenkwinkel des zweiten Detektionselementes 20 erfaßt werden. Da die Ortsänderung des zweiten Detektionselementes 20 direkt auf die Lenksäule 18 und damit auf das Lenkgetriebe und über das Lenkgetriebe auf die Räder des Fahrzeugs übertragen wird, handelt es sich bei diesem um den Lenkwinkel gemäß der ersten eingangs erwähnten Alternative. Dieser Lenkwinkel unterscheidet sich aufgrund der Verbindungsgliedverformung von dem durch das Lenksensorelement 14 erfaßten Lenkwinkel, einem Lenkwinkel gemäß der zweiten eingangs erwähnten Alternative. Die Differenz zwischen den Winkelwerten ist proportional zu dem Lenkmoment, das der Fahrer bei der Bewegung des Lenkrads aufbringt. Die Ermittlung des Lenkmoments aus den erfaßten Lenkwinkeln gemäß der ersten und der zweiten Alternative erfolgt durch eine Auswerteeinheit 28. Mit Hilfe der Auswerteeinheit 28 kann außerdem eine interne Plausibilisierung durchgeführt werden. Zu diesem Zweck werden die beiden ermittelten Lenkwinkel miteinander verglichen und so festgestellt, ob die beiden Größen miteinander korrelieren. Ist dies nicht der Fall, kann durch die Auswerteeinheit 28 eine Fehlermeldung erzeugt werden, die signalisiert, daß ein Fehler innerhalb der Sensorvorrichtung vorliegt.

Eine weitere Ausführungsform der Erfindung sieht abweichend von der Figur vor, daß der Lenksignalgeber 12 und/oder der Signalgeber 24 an der Lenksäulenverkleidung 16 angeordnet sind/ist, während das Lenksensorelement 14 und/oder das Sensorelement 26 am ersten Detektionselement 10, insbesondere dem Lenkrad, bzw. dem zweiten Detektionselement 20 angeordnet sind/ist.

In einer weiteren, hier nicht dargestellten Ausführungsform ist das Verbindungsglied in Form eines Drehstabes in die Lenksäule integriert.

Weitere Veränderungen, Modifikationen oder Kombinationen der oben beschriebenen Ausführungsformen sind für den Fachmann offensichtlich und fallen ebenso unter den Schutzumfang der beigefügten Ansprüche.

## Patentansprüche

1. Sensorvorrichtung zur Ermittlung eines Lenkwinkels und eines Lenkmoments bei einer Lenkradbewegung in einem Fahrzeug mit:
- einer ersten Erfassungseinheit, mit der eine erste Größe ermittelbar ist, die mit einer relativen Ortsänderung eines ersten mit der Lenkradbewegung beaufschlagten Detektionselementes (10) gegenüber einem ersten unbeweglichen Fahrzeugelement (16) korreliert ist;
- einer zweiten Erfassungseinheit, mit der eine zweite Größe ermittelbar ist, die mit einer relativen Ortsänderung eines zweiten Detektionselementes (20) gegenüber einem zweiten unbeweglichen Fahrzeugelement (16) korreliert ist, wobei das zweite Detektionselement (20) mit der Lenkradbewegung über ein elastisches Verbindungsglied (22) beaufschlagt ist; und
- einer Auswerteeinheit (28), durch die aus der ersten Größe oder aus der zweiten Größe ein Lenkwinkel und aus der ersten und der zweiten Größe das Lenkmoment des Lenkrads ermittelbar ist
**dadurch gekennzeichnet,**
**dass** die Sensorvorrichtung eine Lenksäule (18) mit einer Längsachse aufweist, wobei das elastische Verbindungsglied (22) außerhalb der Längsachse der Lenksäule (18) angeordnet ist.

2. Sensorvorrichtung nach Anspruch 1,
**dadurch gekennzeichnet,**
**dass** mit der Auswerteeinheit (28) eine dritte Größe durch Differenzbildung der ersten und der zweiten Größe ermittelbar ist, wobei die dritte Größe proportional zu dem Lenkmoment ist.

3. Sensorvorrichtung nach einem der vorhergehenden Ansprüche,
**dadurch gekennzeichnet,**
**dass** die relative Ortsänderung des ersten mit der Lenkradbewegung beaufschlagten Detektionselementes (10) gegenüber dem ersten unbeweglichen Fahrzeugelement (16) eine Winkeländerung, insbesondere der Lenkwinkel, ist.

4. Sensorvorrichtung nach einem der vorhergehenden Ansprüche,
**dadurch gekennzeichnet,**
**dass** die relative Ortsänderung des zweiten Detektionselementes (20) gegenüber dem zweiten unbeweglichen Fahrzeugelement (16) eine Winkeländerung, insbesondere der Lenkwinkel, ist.

5. Sensorvorrichtung nach einem der vorhergehenden Ansprüche,
**dadurch gekennzeichnet,**
**dass** die erste Erfassungseinheit einen Lenksignalgeber (12) und ein Lenksensorelement (14) aufweist, wobei der Lenksignalgeber (12) und das Lenksensorelement (14) derartig ausgebildet und an dem ersten Detektionselement (10) und dem ersten unbeweglichen Fahrzeugelement (16) angeordnet sind, dass die relative Bewegung des ersten Detektionselementes (10) gegenüber dem ersten unbeweglichen Fahrzeugelement (16), insbesondere induktiv und/oder magnetoresistiv und/oder optisch, durch das Lenksensorelement (14) detektierbar ist.

6. Sensorvorrichtung nach einem der vorhergehenden Ansprüche,
**dadurch gekennzeichnet,**
**daß** die zweite Erfassungseinheit einen Signalgeber (24) und ein Sensorelement (26) aufweist, wobei der Signalgeber (24) und das Sensorelement (26) derartig ausgebildet und an dem zweiten Detektionselement (20) und an dem zweiten unbeweglichen Fahrzeugelement (16) angeordnet sind, dass die relative Bewegung des zweiten Detektionselementes (20) gegenüber dem zweiten unbeweglichen Fahrzeugelement (16), insbesondere induktiv und/oder magnetoresistiv und/oder optisch, durch das Sensorelement (26) detektierbar ist.

7. Sensorvorrichtung nach einem der vorhergehenden Ansprüche,
**dadurch gekennzeichnet,**
**dass** das elastische Verbindungsglied (22) ein Federelement und/oder ein Elastomer umfasst.

8. Sensorvorrichtung nach einem der vorhergehenden Ansprüche,
**dadurch gekennzeichnet,**
**dass** das erste unbewegliche Fahrzeugelement (16) dem zweiten unbeweglichen Fahrzeugelement (16) entspricht.

9. Sensorvorrichtung nach einem der vorhergehenden Ansprüche,
**dadurch gekennzeichnet,**
**dass** das erste Detektionselement (10) das Lenkrad ist.

10. Sensorvorrichtung nach einem der vorhergehenden Ansprüche,
**dadurch gekennzeichnet,**
**dass** das erste und/oder das zweite unbewegliche Fahrzeugelement (16) eine Verkleidung der Lenksäule (18) ist.

11. Verfahren zur Ermittlung eines Lenkwinkels und eines Lenkmoments bei einer Lenkradbewegung in einem Fahrzeug, umfassend folgende Schritte:
a) Ermitteln einer ersten Größe, die mit einer relativen Ortsänderung eines ersten mit der Lenkradbewegung beaufschlagten Detektionselementes (10) gegenüber einem ersten unbeweglichen Fahrzeugelement (16) korreliert ist;
b) Ermitteln einer zweiten Größe, die mit einer relativen Ortsänderung eines zweiten Detektionselementes (20) gegenüber einem zweiten unbeweglichen Fahrzeugelement (16) korreliert ist, wobei das zweite Detektionselement mit der ersten Lenkradbewegung über ein elastisches Verbindungsglied beaufschlagt ist, das außerhalb der Längsachse der Lenksäule (18) angeordnet ist; und
c) Ermitteln eines Lenkwinkels aus der ersten Größe oder aus der zweiten Größe und Ermitteln des Lenkmoments aus der ersten und der zweiten Größe.

12. Verfahren nach Anspruch 11,
**dadurch gekennzeichnet,**
**dass** in einem weiteren Schritt aus der ersten Größe und aus der zweiten Größe eine Vergleichsgröße ermittelt wird, die mit einem Grenzwert verglichen wird, wobei bei Überschreiten oder bei Unterschreiten des Grenzwertes eine Fehlermeldung erzeugt wird.

## Claims

1. Sensor device for determining a steering angle and a steering torque during a steering wheel movement in a vehicle, comprising:
- a first detection unit by means of which a first value correlated with a relative change in the location of a first detection element (10) acted upon by the steering wheel movement with respect to a first fixed vehicle element (16) can be determined;
- a second detection unit by means of which a second value correlated with a relative change in the location of a second detection element (20) with respect to a second fixed vehicle element (16) can be determined, the second detection element (20) being acted upon by the steering wheel movement via a flexible link (22), and
- an evaluation unit (28) by means of which a steering angle can be determined from the first value or from the second value and the steering torque of the steering wheel can be determined from the first and second values,
**characterised in that** the sensor device has a steering column (18) with a longitudinal axis, the flexible link (22) being arranged outside the longitudinal axis of the steering column (18).

2. Sensor device according to claim 1, **characterised in that** a third value can be determined by means of the evaluation unit (28) by calculating the difference between the first and second values, the third value being proportional to the steering torque.

3. Sensor device according to one of the preceding claims, **characterised in that** the relative change in the location of the first detection element (10) acted upon by the steering wheel movement with respect to the first fixed vehicle element (16) is a change of angle, in particular the steering angle.

4. Sensor device according to one of the preceding claims, **characterised in that** the relative change in the location of the second detection element (20) with respect to the second fixed vehicle element (16) is a change of angle, in particular the steering angle.

5. Sensor device according to one of the preceding claims, **characterised in that** the first detection unit has a steering signal generator (12) and a steering sensor element (14), the steering signal generator (12) and the steering sensor element (14) being designed in such a manner and arranged in such a manner on the first detection element (10) and on the first fixed vehicle element (16) that the relative movement of the first detection element (10) with respect to the first fixed vehicle element (16) can be detected, in particular, inductively and/or magnetoresistively and/or optically by the steering sensor element (14).

6. Sensor device according to one of the preceding claims, **characterised in that** the second detection unit has a signal generator (24) and a sensor element (26), the signal generator (24) and the sensor element (26) being designed in such a manner and arranged in such a manner on the second detection element (20) and on the second fixed vehicle element (16) that the relative movement of the second detection element (20) with respect to the second fixed vehicle element (16) can be detected, in particular, inductively and/or magnetoresistively and/or optically by the sensor element (26).

7. Sensor device according to one of the preceding claims, **characterised in that** the flexible link (22) includes a spring element and/or an elastomer.

8. Sensor device according to one of the preceding claims, **characterised in that** the first fixed vehicle element (16) corresponds to the second fixed vehicle element (16).

9. Sensor device according to one of the preceding claims, **characterised in that** the first detection element (10) is the steering wheel.

10. Sensor device according to one of the preceding claims, **characterised in that** the first and/or the second fixed vehicle element (16) is a cover of the steering column (18).

11. Method of determining a steering angle and a steering torque during a steering wheel movement in a vehicle, including the following steps:
a) determining a first value correlated with a relative change in the location of a first detection element (10) acted upon by the steering wheel movement with respect to a first fixed vehicle element (16);
b) determining a second value correlated with a relative change in the location of a second detection element (20) with respect to a second fixed vehicle element (16), the second detection element being acted upon by the first steering wheel movement via a flexible link arranged outside the longitudinal axis of the steering column (18), and
c) determining a steering angle from the first value or from the second value and determining the steering torque from the first and second values.

12. Method according to claim 11, **characterised in that**, in a further step, a comparative value is determined from the first value and from the second value and is compared with a limit value, an error message being generated if the value exceeds or falls below the limit value.

## Revendications

1. Dispositif de détection pour déterminer un angle de braquage et un couple de braquage à l'occasion d'un mouvement du volant de direction dans un véhicule comportant :
- une première unité d'acquisition, au moyen de laquelle une première grandeur peut être déterminée, qui est en corrélation avec un changement spatial relatif d'un premier élément de détection (10) soumis à l'influence du mouvement du volant de direction par rapport à un premier élément de véhicule immobile (16) ;
- une seconde unité d'acquisition, au moyen de laquelle une deuxième grandeur peut être déterminée, qui est en corrélation avec un changement spatial relatif d'un second élément de détection (20) par rapport à un second élément de véhicule immobile (16), ledit second élément de détection (20) étant soumis à l'influence du mouvement du volant de direction par l'intermédiaire d'un organe de liaison élastique (22) ; et
- une unité d'exploitation (28), grâce à laquelle un angle de braquage peut être déterminé à partir de la première grandeur ou à partir de la deuxième grandeur et grâce à laquelle le couple de braquage du volant de direction peut être déterminé à partir de la première et de la deuxième grandeur,
**caractérisé en ce**
**que** le dispositif de détection présente une colonne de direction (18) avec un axe longitudinal, l'organe de liaison élastique (22) étant agencé en dehors de l'axe longitudinal de la colonne de direction (18).

2. Dispositif de détection selon la revendication 1,
**caractérisé en ce**
**qu'**une troisième grandeur peut être déterminée au moyen de l'unité d'exploitation (28) via soustraction de la première et de la deuxième grandeur, ladite troisième grandeur étant proportionnelle au couple de braquage.

3. Dispositif de détection selon l'une quelconque des revendications précédentes,
**caractérisé en ce**
**que** le changement spatial relatif du premier élément de détection (10) soumis à l'influence du mouvement du volant de direction par rapport au premier élément de véhicule immobile (16) est un changement angulaire, en particulier de l'angle de braquage.

4. Dispositif de détection selon l'une quelconque des revendications précédentes,
**caractérisé en ce**
**que** le changement spatial relatif du second élément de détection (20) par rapport au second élément de véhicule immobile (16) est un changement angulaire, en particulier de l'angle de braquage.

5. Dispositif de détection selon l'une quelconque des revendications précédentes,
**caractérisé en ce**
**que** la première unité d'acquisition présente un générateur de signaux de direction (12) et un élément de détection de direction (14), ledit générateur de signaux de direction (12) et ledit élément de détection de direction (14) étant conçus et agencés sur le premier élément de détection (10) et le premier élément de véhicule immobile (16) de telle manière que le mouvement relatif du premier élément de détection (10) par rapport au premier élément de véhicule immobile (16) peut être détecté grâce à l'élément de détection de direction (14), en particulier par inductance et/ou magnétorésistance et/ou optiquement.

6. Dispositif de détection selon l'une quelconque des revendications précédentes,
**caractérisé en ce**
**que** la seconde unité d'acquisition présente un générateur de signaux (24) et un élément de détection (26), ledit générateur de signaux (24) et ledit élément de détection (26) étant conçus et agencés sur le second élément de détection (20) et sur le second élément de véhicule immobile (16) de telle manière que le mouvement relatif du second élément de détection (20) par rapport au second élément de véhicule immobile (16) peut être détecté grâce à l'élément de détection (26), en particulier par inductance et/ou magnétorésistance et/ou optiquement.

7. Dispositif de détection selon l'une quelconque des revendications précédentes,
**caractérisé en ce**
**que** l'organe de liaison élastique (22) comprend un élément élastique et/ou un élastomère.

8. Dispositif de détection selon l'une quelconque des revendications précédentes,
**caractérisé en ce**
**que** le premier élément de véhicule immobile (16) correspond au second élément de véhicule immobile (16).

9. Dispositif de détection selon l'une quelconque des revendications précédentes,
**caractérisé en ce**
**que** le premier élément de détection (10) est le volant de direction.

10. Dispositif de détection selon l'une quelconque des revendications précédentes,
**caractérisé en ce**
**que** le premier et/ou le second élément de véhicule immobile (16) est un habillage de la colonne de direction (18).

11. Procédé pour déterminer un angle de braquage et un couple de braquage à l'occasion d'un mouvement du volant de direction dans un véhicule, comprenant les étapes suivantes :
a) détermination d'une première grandeur qui est en corrélation avec un changement spatial relatif d'un premier élément de détection (10) soumis à l'influence du mouvement du volant de direction par rapport à un premier élément de véhicule immobile (16) ;
b) détermination d'une deuxième grandeur qui est en corrélation avec un changement spatial relatif d'un second élément de détection (20) par rapport à un second élément de véhicule immobile (16), ledit second élément de détection (20) étant soumis à l'influence du premier mouvement du volant de direction par l'intermédiaire d'un organe de liaison élastique (22), qui est agencé en dehors de l'axe longitudinal de la colonne de direction ; et
c) détermination d'un angle de braquage à partir de la première grandeur ou à partir de la deuxième grandeur et détermination du couple de braquage à partir de la première et de la deuxième grandeur.

12. Procédé selon la revendication 11,
**caractérisé en ce**
**que** dans une étape ultérieure, une grandeur de référence est déterminée à partir de la première grandeur et à partir de la deuxième grandeur, ladite grandeur de référence étant comparée avec une valeur limite, un message d'erreur étant généré lors dépassement de la valeur limite ou lors du passage sous le seuil de cette valeur.
